# EUROPEAN PATENT SPECIFICATION

(11) **EP 3 944 950 B1**
(45) Date of publication and mention of the grant of the patent: **18.09.2024**
(21) Application number: 21185164.7
(22) Date of filing: 12.07.2021
(51) Int. Cl.: B29C 51/46, G06F 3/048, G05B 19/40

(54) **CONTROL OF A THERMOFORMING APPARATUS**
STEUERUNG EINER THERMOFORMEINRICHTUNG
COMMANDE D'UN APPAREIL DE THERMOFORMAGE

(30) Priority: 30.07.2020 IT 202000018694
(43) Date of publication of application: 02.02.2022
(73) Proprietor: C.M.S. S.p.A., 24019 Zogno (BG) (IT)
(72) Inventor: GAIAZZI, Fabio, 21040 Sumirago (VA) (IT)
(74) Representative: Luppi Intellectual Property S.r.l.

(56) References cited:
- EP-B1- 2 241 862
- JP-A- 2002 103 438
- US-A1- 2013 263 034
- US-B2- 7 317 175

## Description

### Background of the invention

The invention relates to a method and/or a device for controlling a thermoforming apparatus and a related thermoforming apparatus.

Specifically, but not exclusively, the invention in question can be practically used for the thermoforming of thermoplastic materials, in particular composite materials, non-composite materials, etc.

As known, thermoforming is a process for forming polymeric plates, sheets or films to obtain finished products, in which the thermoplastic plate is heated to a desired degree of plasticity and then is deformed on a mold by pressure, depression, mechanical strains, etc.

In fact, various thermoforming techniques are known, such as, for example, thermoforming under vacuum, under pressure, with punch or counter-mold (plug-assist), with reverse drawing, free, etc. Generally, a known type of thermoforming apparatus comprises at least one device for gripping the edge of the plate (plate-pressing frame), a heater, a mold and may also comprise a counter-mold or punch and means for cooling the thermoformed product.

### Patent publication EP 2 241 862 B1 discloses a method as in the preamble of claim 1.

Patent publication US2013263034A1 discloses controlling apparatuses by using interfaces displaying at least two icon segments on two regions of a display of the touchscreen, each icon segment being associated with a respective operation cycle, whereby the two ends of each icon segment represent the start time and the end time of the respective operation; the icon segments are parallel to each other and arranged so as to define a time line which graphically represents the respective operations in chronological order; each region is an active or input region of the touchscreen configured to allow the start and/or end time of the respective operation to be changed, by varying the length along the timeline of each icon segment by touching.

Known thermoforming apparatuses can be improved in various aspects, in particular as regards the simplification of the setting phase of the thermoforming cycle by an operator, in order to reduce the risk of setting errors and to make this phase quicker and more immediate. It is also desirable to improve the analysis and monitoring phase of the thermoforming cycle, for example to allow an operator to detect any anomalies in a simple and reliable way, with the ability to identify the cause or origin of the anomaly.

### Summary of the invention

An object of the invention is to obviate one or more of the aforementioned limitations and drawbacks of the prior art.

An object is to provide an alternative solution to the problem of effectively controlling a thermoforming apparatus.

An advantage is to provide a method and/or a control device which allows to set up a thermoforming cycle in a simple and practical way, with a reduction of the risk of setting errors.

An advantage is to allow an immediate and effective detection of any anomalies in the thermoforming cycle.

An advantage is to easily identify the cause or origin of any anomaly in a thermoforming cycle.

An advantage is to make available a constructively simple and economical device for controlling a thermoforming apparatus.

An advantage is to predict the productivity of the machine, in particular due to the fact that the exact duration of the thermoforming cycle can be inferred.

These objects and advantages, and more besides, are achieved by a method and/or a device according to one or more of the claims reported below.

In one example, a control method comprises the steps of connecting a touchscreen to a thermoforming apparatus configured to perform at least one thermoforming cycle, displaying a plurality of icon segments on distinct regions of a touchscreen, wherein each icon segment is associated with a respective operation of the forming cycle, the lengths of the icon segments are proportional to the durations of the respective operations of the forming cycle, the icon segments are parallel to each other and to a time line that graphically represents the respective operations in chronological order, and wherein an operator can vary the length and the positioning along the time line of each icon segment by touching so as to consequently vary the actual settings of the initial and final moments of the respective operation.

### Brief description of the drawings

The invention can be better understood and implemented with reference to the attached drawings which illustrate a non-limiting example of implementation, in which:
Figures 1 to 3 show, in schematic form, three examples of thermoforming apparatuses of the known art;
Figure 4 shows a screen shot on a touchscreen of a first example of a control device made in accordance with the present invention;
Figures 5 and 6 show two enlarged details of two screen shots on a touchscreen of a control device made in accordance with the present invention.

### Detailed description

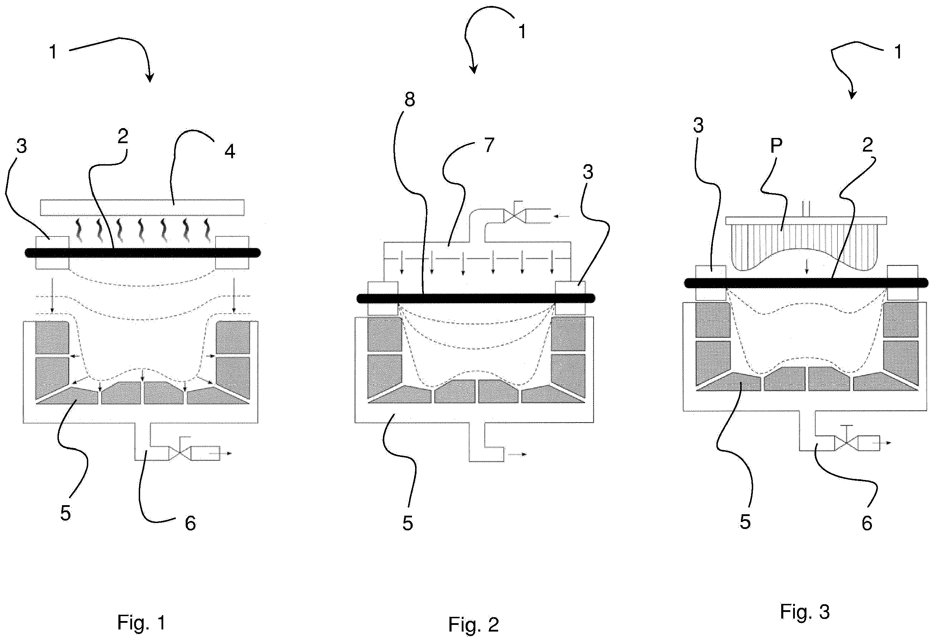

In the above Figures 1 to 3, three diagrams of thermoforming apparatuses with three different thermoforming technologies are shown. In particular, an apparatus for vacuum thermoforming in Figure 1, an apparatus for pressure thermoforming in Figure 2, an apparatus for thermoforming with punch (plug-assist) in Figure 3 are represented. The method and the control device in question may be applied, in particular, to one or more of the thermoforming apparatuses of Figures 1 to 3. The method and the control device in question may be applied, however, also to other types of thermoforming apparatuses, known and not represented in the figures. It is noted that the thermoforming apparatuses of Figures 1 to 3 have been shown by way of non-limiting example.

With reference to the aforementioned figures, 1 denotes a thermoforming apparatus as a whole, with 2 a plate or sheet to be thermoformed, with 3 gripping means for holding the plate still by gripping or pressing an edge of the plate, with 4 heating means for heating the plate, with 5 a mold for thermoforming the plate, with P a counter mold or plug to collaborate with the mold for thermoforming the plate, with 6 vacuum means to generate a depression in the mold such to deform the sheet, with 7 pneumatic pressure means to generate an overpressure on the sheet such as to deform it.

The gripping means 3 may comprise, in particular, a plate-pressing frame. The heating means 4 may comprise, in particular, radiation means. The mold 5 may comprise, in particular, holes for the passage of gas to generate depression or overpressure.

The thermoforming apparatuses represented above, or also thermoforming apparatuses of other type not represented, can be equipped with a control device as described below.

The control device, used to control a thermoforming apparatus, may comprise, in particular, a touchscreen 8 configured to be connected or to belong to the control means (for example electronic and programmable control means equipped with appropriate computer program instructions) configured to control the thermoforming apparatus 1.

The control device may comprise, in particular, means for showing at least two icon segments 9 on two (distinct) regions of a screen of the touchscreen. In particular, each icon segment 9 may be associated with a respective operation of the forming cycle.

The operations of the thermoforming cycle that can be associated with the icon segments 9 may include, in particular, a stroke of a movable element of the apparatus and/or an activation of at least one actuator such as, for example, heating means 4, vacuum means 6, pneumatic pressure means 7, or other actuators not shown in the figures such as, for example, ventilation means, cooling means, nebulization means, etc.

Each icon segment 9 includes an active region of the touchscreen 8 to allow the display and setting of various parameters and activities related to the thermoforming cycle. In particular, it will be possible to view and set the movements (up and down) of the gripping means 3 (plate pressing frame), of the mold 5 and of the counter-mold P, the activation time of the various heating means 4, the setting parameters of the sheet heating pyrometers and of the piece cooling means, the parameters of the decompression means of the apparatus, the drawing control parameters (in particular the pre-stretching of the sheet 2), the ventilation and nebulization parameters of water to cool the piece, the operating parameters of the vacuum means 6 and the pneumatic pressure means 7, the coordination of the operating sequence suitable for the extraction of the piece (for example the emission of extraction air, the handling in case of any undercuts in the mold 5 and/or in the counter-mold P, the positioning of the counter-mold P and the gripping means 3, etc.).

The lengths of the icon segments 9 may be, in particular, proportional to the durations of the respective operations of the forming cycle. The two ends (left and right) of each icon segment 9 may represent, in particular, the initial moment (left end) and the final moment (right end) of the respective operation.

The icon segments 9 may be, in particular, parallel to each other. In particular, the icon segments 9 may be positioned in such a way as to define a time line that graphically represents in chronological order the various operations of the forming cycle associated with the respective icon segments 9. By time line we mean a graphic representation of a chronological sequence of events.

Each aforementioned screen region of the touchscreen 8 may be, in particular, an input region of the touchscreen 8, that is, a region sensitive to the touch of an operator. In particular, each screen region may be configured to allow to vary the initial and/or final moment of the respective operation, i.e. to vary the left end and/or the right end of the icon segment 9 in such a way as to increase or decrease the length of the icon segment 9. In particular, each screen region may be configured to allow the icon segment 9 to be moved in block so as to vary its positioning on the time line.

The control device is configured to allow the execution of a method to control the thermoforming apparatus. This control method may include, in particular, the step of providing a thermoforming apparatus 1 configured to perform at least one thermoforming cycle, that is, a work cycle on at least one plate 2.

The control method may include, in particular, the step of connecting the touchscreen 8 to the thermoforming apparatus 1.

The control method may comprise, in particular, the step of showing at least two icon segments 9 on two regions of the touchscreen 8, in which each icon segment 9, as mentioned, is associated with a respective operation of the cycle forming. The icon segments may comprise, in particular, a first icon segment 9 associated with a first operation of the forming cycle.

This first operation may comprise, in particular, at least one stroke of the gripping means 3 (plate pressing frame) of the thermoforming apparatus 1. The stroke of the gripping means 3 may include, in particular, at least one movement in the vertical direction, for example a downward movement to press the edge of plate 2 or an upward movement to free the edge of plate 2.

This first operation may comprise, in particular, at least one stroke of a mold 5 of the thermoforming apparatus 1. The stroke of the mold 5 may comprise, in particular, at least one movement in the vertical direction, for example an upward movement to approach plate 2, or a downward movement to move away from plate 2.

This first operation may comprise, in particular, at least one stroke of a counter-mold P of the thermoforming apparatus 1. The stroke of the counter-mold P may include, in particular, at least one movement in the vertical direction, for example a downward movement to approach plate 2, or an upward movement to move away from plate 2.

The icon segments may comprise, in particular, a second icon segment 9 associated with a second operation of the forming cycle.

This second operation may comprise, in particular, at least one heating of a plate 2 being processed by heating means 4, for example by means of at least one upper heater (arranged above the plate 2 being processed) of the thermoforming apparatus 1 and/or by means of a lower heater (located under the plate 2) of the thermoforming apparatus 1

The icon segments may comprise, in particular, a third icon segment 9 associated with a third operation of the forming cycle.

This third operation may include, in particular, a generation of depression on a mold 5 or on a counter-mold P of the thermoforming apparatus 1, for example by means of vacuum means 6.

This third operation may include, in particular, a generation of an overpressure on a mold 5 or a counter-mold P of the thermoforming apparatus 1, for example by means of pneumatic pressure means 7.

The icon segments may comprise, in particular, a fourth icon segment 9 associated with a fourth operation of the forming cycle.

This fourth operation may include, in particular, at least one cooling of a processed piece (for example the molded piece) by means of cooling the thermoforming apparatus. This fourth operation may include, in particular, at least one nebulization on a plate being processed by nebulization means of the thermoforming apparatus 1.

The control method may comprise, in particular, the step of showing on the touchscreen 8 at least one line 10 orthogonal to the time line, i.e. orthogonal to the (horizontal) arrangement of the icon segments 9. The line 10, which visually indicates the progress of time is essentially a line of temporal progress that proceeds, in particular, from left to right.

The line 10 may be, in particular, movable in the direction of the time line so that, for each instant of the processing cycle time defined by the time line, the line 10 is superimposed only on the icon segments 9 which are associated with the operations of the forming cycle which are actually active in that same instant. The movement of the line 10 in the direction of the time line allows an operator to see and verify on the screen what happens moment by moment during the working cycle.

The control method may include, in particular, the step of automatically moving the line 10 on the touchscreen 8, with the various icon segments 9 visible, during the actual execution of the thermoforming cycle, in the direction of the time line, with a defined speed representative of the real time progress from an initial moment to a final moment of the thermoforming cycle.

The control method may include, in particular, the step of showing on the touchscreen 8 a warning signal 11, arranged in such a way as to be clearly associated with a certain icon segment 9, if no setting has yet been made of the respective operation associated with that icon segment 9. In other words, the warning signal 11 is automatically cleared from the icon segment 9 only after at least one setting of the respective operation associated with that icon segment 9 has been made.

The control method may comprise, in particular, the step of showing on the touchscreen 8 an anomaly signal 12, arranged in such a way as to be clearly associated with a certain icon segment 9, if a relative anomaly status is detected to the respective operation associated with that icon segment 9. This allows the operator not only to notice an operating anomaly, but also to recognize, in a simple, evident and immediate way, what is the possible cause or origin of the anomaly itself and intervene accordingly.

The control method may include, in particular, the step of representing on the screen the icon segments 9 with different colors according to the type of operations associated with the icon segments 9, so that the operations relating to the movement of elements are associated with 9 icon segments of a first color (gray in the example), the operations relating to heating are associated with icon segments 9 of a second color (red in the example), the operations relating to vacuum generation are associated icon segments 9 of a third color (orange in the example), the operations relating to cooling are associated with icon segments 9 of a fourth color (blue in the example).

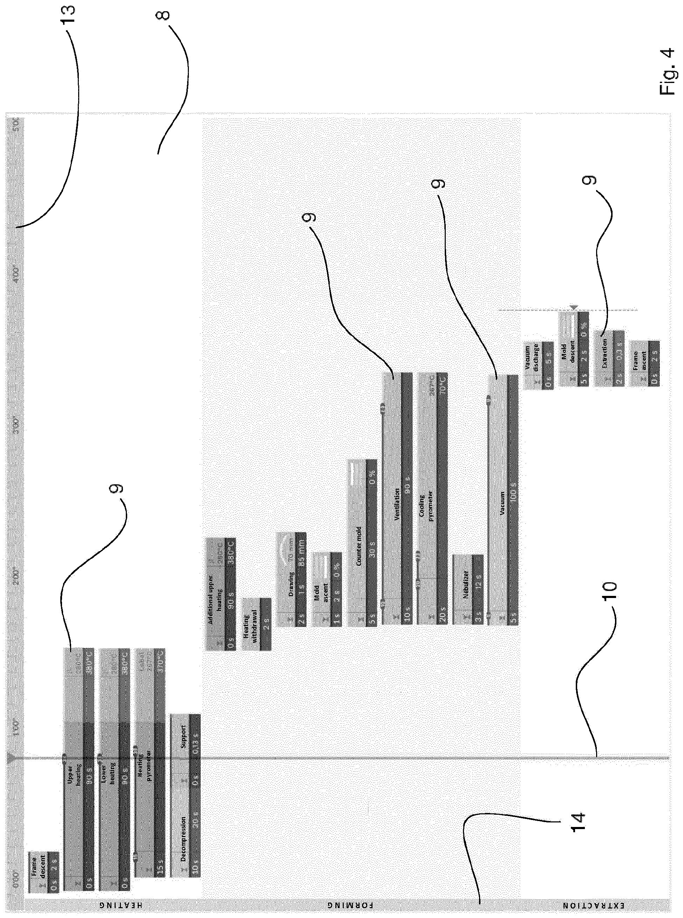

The control method may comprise, in particular, the step of representing on the screen one or more segments icons 9 which are indicative of a certain event that takes place during the thermoforming cycle due to the set operations. This event may include, in particular, a deformation of the sheet 2 during the forming stage (see, for example, the icon segment 9 called "Drawing" in Figure 4), a pneumatic support during the heating stage (see, for example, the icon segment 9 called "Support" in Figure 4), an extraction of the piece formed during the extraction stage (see, for example, the icon segment 9 called "Extraction" in Figure 4). The icon segments 9 indicative of an event caused by the set operations may be represented with a fifth color (green in the example). Even these icon segments 9 indicative of an event caused by the set operations may be touch sensitive and may therefore be used to set the thermoforming cycle, for example by changing the time duration of the event by touching (moving the start or end time and/or by moving the relative icon segment in block 9).

The control device may comprise, in particular, means for automatically modifying the setting of the operations linked to that event, so as to adapt (for example with suitable calculation means) the set parameters of these operations so that the result final matches the changes made to the event by touching the touchscreen.

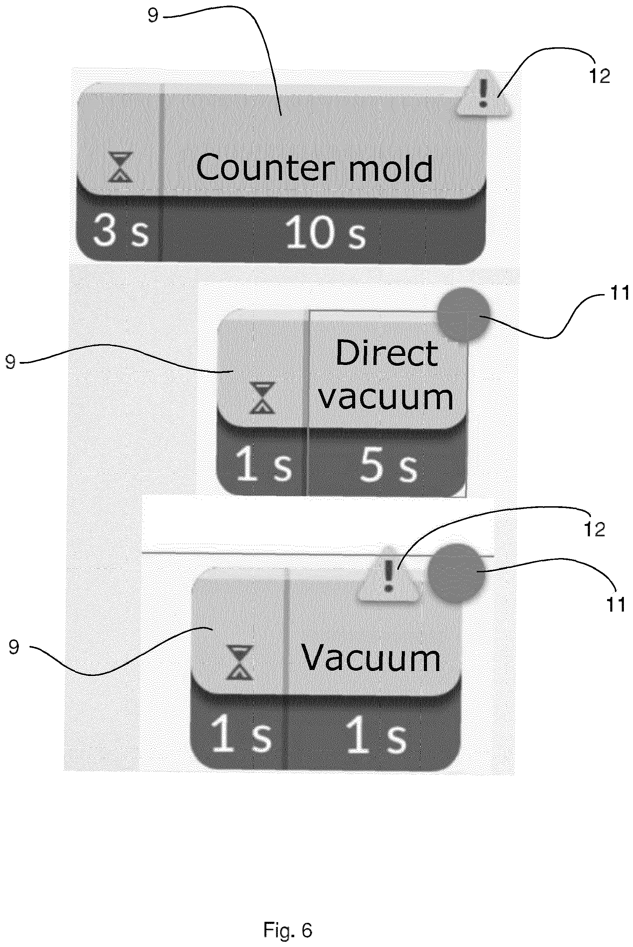

Figures 4 to 6 show only some examples of possible screens that can be obtained with the control device in question.

In the example of Figure 4 (counter-mold assisted vacuum thermoforming) a time line 13 arranged horizontally on the upper side of the screen is represented and a cycle line 14 arranged vertically on one side (for example left) of the screen is represented to indicate the main stages of the thermoforming cycle, in the specific case stage of heating at the top, stage of forming at the center, stage of extraction at the bottom, where each stage of the cycle groups together some single operations of the overall thermoforming cycle.

As said, each icon segment 9 may be, in particular, a sensitive element of the touchscreen 8. In particular, each icon segment 9 may be dragged by touch in the direction (horizontal on the screen) of the time line 13, so as to position the icon segment 9 along the time line 13, in particular during a setting phase of the working cycle. In particular, each icon segment 9 may be dragged by touch in a transverse direction (orthogonal, for example vertical in the screen) to the direction of the time line 13 and/or parallel to the cycle line 14, in particular during a setting phase of the working cycle.

In the specific example, the heating stage includes the following operations: the movement of the gripping means 3, i.e. an icon segment 9 for the step of frame descent; the activation of the heating means 4, i.e. icon segments 9 for the steps of upper heating, lower heating and pyrometer heating; the activation of decompression, i.e. icon segments 9 for the steps of decompression and sustenance.

In the specific example, the forming stage includes the following operations: the activation of the heating means 4, i.e. an icon segment 9 for the step of additional upper heating; the handling of various elements of the thermoforming apparatus 1, namely icon segments 9 for the steps of heating withdrawal, mold up and counter mold; the activation of the cooling means, i.e. icon segments 9 for the steps of ventilation, pyrometer cooling and nebulizer; the activation of the vacuum means 6, i.e. an icon segment 9 for the step of vacuum; the representation along the time line of an event, that is an icon segment 9 for the step of drawing.

In the specific example, the extraction stage includes the following operations: the handling of various elements of the thermoforming apparatus 1, namely icon segments 9 for the steps of mold descent and frame ascent; the activation of the vacuum means 6, i.e. an icon segment 9 for the step of vacuum discharge; the representation along the time line of an event, i.e. an icon segment 9 for the step of extraction.

Each icon segment 9 may include, in particular, some data or parameters relating to the operation associated with that particular icon segment 9, such as, for example, the overall duration of the operation or, as in the illustrated examples, the indication of two time periods, namely a first period which indicates the delay of the operation, in particular due to various types of inertia (mechanical, thermal, etc.), and a second period which indicates the effective duration of the operation when fully operational.

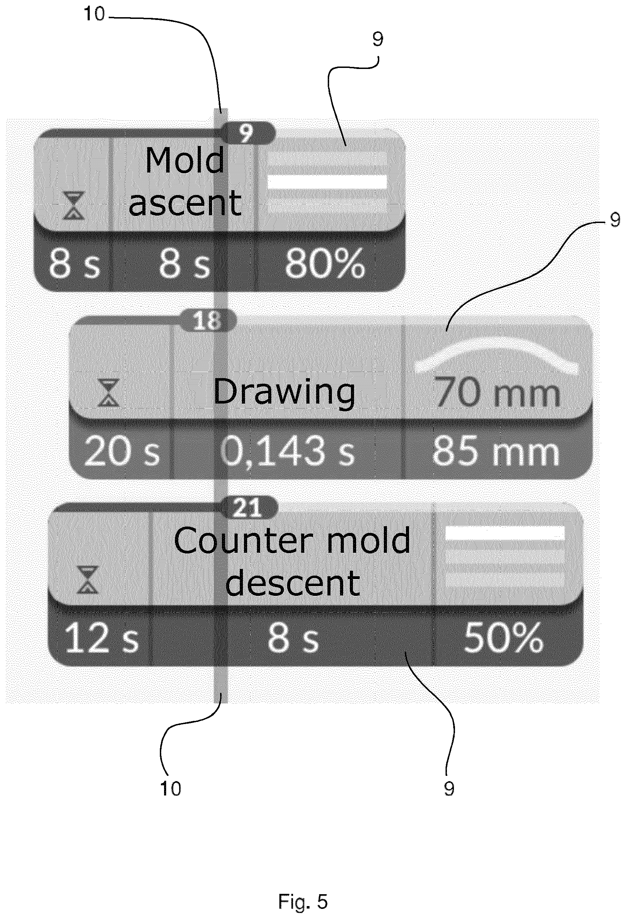

It is possible to provide, as in these examples (see Figure 5), that each icon segment 9 is associated with an indication of the time actually elapsed since the start of the operation associated with that icon segment 9. This indication may include, for example, a number (for example the seconds) that appears on an edge of the segment and that runs together with the flow of line 10, i.e. the line that displays the time course, or progression, of the thermoforming cycle from moment to moment from the start to the end of the entire thermoforming cycle. This indication may, for example, have the same color as the icon segment 9.

As mentioned, each icon segment 9 may be used to set one or more parameters relating to the operation associated with that particular icon segment 9. In particular, it is possible to modify the settings of one or more time parameters of the operation (operation start time and/or operation end time and/or operation duration) by simply dragging the left end of icon segment 9 to change the start time, dragging the right end of icon segment 9 to change the end time, dragging the entire icon segment 9 to change the temporal location of the operation within the thermoforming cycle. This possibility considerably facilitates the task of an operator who must set up a thermoforming cycle correctly, in particular in consideration of the fact that the operator can see on the screen, in a general time line, all the various operations that make up the entire cycle of thermoforming, sequentially ordered with respect to each other, with an overall view of the situation to be set.

It is observed that the control device may be programmed in such a way as to prevent the operator from changing a setting of a parameter in such a way that a situation is incompatible with the thermoforming cycle, for example by denying a change in the displacement of the segment icon 9.

The touchscreen 8 may allow to set other parameters, in addition to the temporal ones, for example parameters of temperature, pressure, depression, speed and/or extent of the stroke, etc., in particular through the possibility of entering alphanumeric values (for example using a keyboard on the touchscreen or other systems).

## Claims

1. Method for controlling a thermoforming apparatus (1), wherein said method comprises the steps of:
- providing a thermoforming apparatus (1) configured to perform at least one thermoforming cycle;
- connecting a touchscreen (8) to the thermoforming apparatus;
- displaying at least two icon segments (9) on two regions of a display of the touchscreen (8), each icon segment (9) being associated with a respective operation of the thermoforming cycle, wherein:
* the lengths of the icon segments (9) are proportional to the duration of the respective operations of the thermoforming cycle, whereby the two ends of each icon segment (9) represent the start time and the end time of the respective operation;
* the icon segments (9) are parallel to each other and arranged so as to define a time line (13) which graphically represents the respective operations in chronological order;
**characterized in that:**
* each region is an active or input region of the touchscreen (8) configured to allow the start and/or end time of the respective operation to be changed by
**varying the length and the positioning along the time line of each icon segment by touching.**

2. Method according to claim 1, wherein said at least two icon segments comprise a first icon segment (9) associated with a first operation of the thermoforming cycle, said first operation comprising at least one stroke of gripping means (3) of said thermoforming apparatus (1) and/or at least one stroke of a mold (5) of said thermoforming apparatus (1) and/or at least one stroke of a counter mold (P) of said thermoforming apparatus (1).

3. Method according to claim 1 or 2, wherein said at least two icon segments comprise a second icon segment (9) associated with a second operation of the thermoforming cycle, said second operation comprising at least one heating of a sheet (2) being processed by means of upper heating means (4) of said thermoforming apparatus (1) and/or at least one heating of a sheet (2) being processed by lower heating means (4) of said thermoforming apparatus (1), where "upper" and "lower" is intended with reference to a sheet (2) being processed.

4. Method according to any one of the preceding claims, wherein said at least two icon segments comprise a third icon segment (9) associated with a third operation of the thermoforming cycle, said third operation comprising a generation of depression on a mold (5) or a counter mold (P) of said thermoforming apparatus (1) and/or a generation of pressure on a mold (5) or a counter mold (P) of said thermoforming apparatus (1).

5. Method according to any one of the preceding claims, wherein said at least two icon segments comprise a fourth icon segment (9) associated with a fourth operation of the thermoforming cycle, said fourth operation comprising at least one cooling of a piece by means of cooling means of said thermoforming apparatus (1) and/or at least one nebulization on a sheet (2) being processed by means of a nebulizer of said thermoforming apparatus (1).

6. Method according to any one of the preceding claims, comprising the step of displaying on said display a line (10) that is orthogonal to the time line (13), said line (10) being movable in the direction of the time line (13) so that, for each instant of the time line (13), said line (10) is superimposed only on the icon segments (9) which are associated with the operations of the thermoforming cycle which in that same instant are active.

7. Method according to claim 6, comprising the step of automatically moving said line (10) on said display, during the execution of the thermoforming cycle, in the direction of the time line (13) with a defined speed representative of the progress of time from an initial moment to a final moment of the thermoforming cycle.

8. Method according to any one of the preceding claims, comprising the step of displaying on said display a cycle line (14) arranged at one end of said display to indicate two or more main stages of the thermoforming cycle, in particular main stages of heating, forming and extraction, where each main stage groups two or more operations of the thermoforming cycle.

9. Method according to any one of the preceding claims, wherein said at least one icon segment (9) is a sensitive element of the touchscreen (8) and is draggable by touch by an operator in the direction of the time line (13) and/or in a direction transverse to the direction of the time line (13).

10. Method according to any one of the preceding claims, comprising the step of representing the icon segments (9) on the display with different colors based on the type of operations associated with the icon segments (9).

11. Method according to claim 10, wherein the icon segments (9) associated with the movement of elements have a first color, the icon segments (9) associated with the heating of the sheet (2) have a second color, the icon segments (9) associated with the vacuum generation have a third color, the icon segments (9) associated with the cooling of the molded piece have a fourth color.

12. Method according to any one of the preceding claims, comprising the step of displaying on said display a warning signal (11) associated with an icon segment (9) if no setting has yet been made of the respective operation associated with said icon segment (9).

13. Method according to any one of the preceding claims, comprising the step of displaying on said display an anomaly signal (12) associated with an icon segment (9) if an anomaly state is detected relating to the respective operation associated with said icon segment (9).

14. Control device for controlling a thermoforming apparatus for implementing a method according to any one of the preceding claims, wherein said device comprises:
- a touchscreen (8) configured to be connected to a thermoforming apparatus (1);
- means for displaying at least two icon segments (9) on two regions of a display of the touchscreen (8), each icon segment (9) being associated with a respective thermoforming cycle operation, wherein:
* the lengths of the icon segments (9) are proportional to the duration of the respective operations of the thermoforming cycle, whereby the two ends of each icon segment (9) represent the start time and the end time of the respective operation;
* the icon segments (9) are parallel to each other and arranged so as to define a time line (13) which graphically represents the respective operations in chronological order;
∗ **characterized in that**:
each region is an input region of the touchscreen (8) configured to allow
the start and/or end time of the respective operation to be changed by
**varying the length and the positioning along the time line of each icon segment by touching.**

15. Thermoforming apparatus, comprising:
- gripping means (3) for gripping an edge of a sheet (2) to be thermoformed, said gripping means (3) comprising, in particular, at least one sheet pressing frame;
- heating means (4) for heating the sheet (2);
- a mold (5) for the thermoforming of the sheet (2);
- a control device made according to claim 14.

## Patentansprüche

1. Verfahren zum Steuern einer Thermoformeinrichtung (1), wobei das Verfahren die Schritte umfasst:
- Bereitstellen einer Thermoformeinrichtung (1), die konfiguriert ist, um mindestens einen Thermoformzyklus durchzuführen;
- Anschließen eines Touchscreens (8) an die Thermoformeinrichtung;
- Anzeigen von mindestens zwei Symbolsegmenten (9) auf zwei Bereichen einer Anzeige des Touchscreens (8), wobei jedes Symbolsegment (9) einem jeweiligen Vorgang des Thermoformzyklus zugeordnet ist, wobei:
* die Längen der Symbolsegmente (9) proportional zur Dauer der jeweiligen Vorgänge des Thermoformzyklus sind, wobei die beiden Enden jedes Symbolsegments (9) den Startzeitpunkt und den Endzeitpunkt des jeweiligen Vorgangs darstellen;
* die Symbolsegmente (9) parallel zueinander und so angeordnet sind, dass sie eine Zeitlinie (13) definieren, die die jeweiligen Vorgänge grafisch in chronologischer Reihenfolge darstellt;
**dadurch gekennzeichnet, dass:**
* jeder Bereich ein aktiver Bereich oder Eingabebereich des Touchscreens (8) ist, der konfiguriert ist, um es zu ermöglichen, dass die Start- und/oder Endzeit des jeweiligen Vorgangs geändert werden kann, indem **die Länge und die Positionierung jedes Symbolsegments entlang der Zeitachse durch Berühren variiert werden.**

2. Verfahren nach Anspruch 1, wobei die mindestens zwei Symbolsegmente ein erstes Symbolsegment (9) umfassen, das einem ersten Vorgang des Thermoformzyklus zugeordnet ist, wobei der erste Vorgang mindestens einen Hub des Greifmittels (3) der Thermoformeinrichtung (1) und/oder mindestens einen Hub einer Form (5) der Thermoformeinrichtung (1) und/oder mindestens einen Hub einer Gegenform (P) der Thermoformeinrichtung (1) umfasst.

3. Verfahren nach Anspruch 1 oder 2, wobei die mindestens zwei Symbolsegmente ein zweites Symbolsegment (9) umfassen, das einem zweiten Vorgang des Thermoformzyklus zugeordnet ist, wobei der zweite Vorgang mindestens eine Erwärmung einer zu verarbeitenden Platte (2) mittels oberer Heizmittel (4) der Thermoformeinrichtung (1) und/oder mindestens eine Erwärmung einer zu verarbeitenden Platte (2) mittels unterer Heizmittel (4) der Thermoformvorrichtung (1) umfasst, wobei sich "obere" und "untere" auf eine zu verarbeitende Platte (2) beziehen.

4. Verfahren nach einem der vorstehenden Ansprüche, wobei die mindestens zwei Symbolsegmente ein drittes Symbolsegment (9) umfassen, das einem dritten Vorgang des Thermoformzyklus zugeordnet ist, wobei der dritte Vorgang ein Erzeugen einer Vertiefung auf einer Form (5) oder einer Gegenform (P) der Thermoformeinrichtung (1) und/oder ein Erzeugen eines Drucks auf einer Form (5) oder einer Gegenform (P) der Thermoformeinrichtung (1) umfasst.

5. Verfahren nach einem der vorstehenden Ansprüche, wobei die mindestens zwei Symbolsegmente ein viertes Symbolsegment (9) umfassen, das einem vierten Vorgang des Thermoformzyklus zugeordnet ist, wobei der vierte Vorgang mindestens eine Kühlung eines Stücks mittels Kühlmitteln der Thermoformeinrichtung (1) und/oder mindestens eine Zerstäubung auf einer zu verarbeitenden Platte (2) mittels eines Zerstäubers der Thermoformeinrichtung (1) umfasst.

6. Verfahren nach einem der vorstehenden Ansprüche, umfassend den Schritt des Anzeigens einer Linie (10) auf der Anzeige, die orthogonal zur Zeitlinie (13) ist, wobei die Linie (10) in Richtung der Zeitlinie (13) verschiebbar ist, so dass zu jedem Zeitpunkt der Zeitlinie (13) die Linie (10) nur den Symbolsegmenten (9) überlagert ist, die den Vorgängen des Thermoformzyklus zugeordnet sind, die zu diesem Zeitpunkt aktiv sind.

7. Verfahren nach Anspruch 6, umfassend den Schritt des automatischen Bewegens der Linie (10) auf der Anzeige während der Ausführung des Thermoformzyklus in Richtung der Zeitlinie (13) mit einer definierten Geschwindigkeit, die den Zeitverlauf von einem Anfangszeitpunkt bis zu einem Endzeitpunkt des Thermoformzyklus darstellt.

8. Verfahren nach einem der vorstehenden Ansprüche, umfassend den Schritt des Anzeigens einer Zykluslinie (14) auf der Anzeige, die an einem Ende der Anzeige angeordnet ist, um zwei oder mehr Hauptphasen des Thermoformzyklus anzuzeigen, insbesondere die Hauptphasen des Erhitzens, Formens und Extrahierens, wobei jede Hauptphase zwei oder mehr Vorgänge des Thermoformzyklus gruppiert.

9. Verfahren gemäß einem der vorstehenden Ansprüche, wobei das mindestens eine Symbolsegment (9) ein empfindliches Element des Touchscreens (8) ist und von einem Bediener durch Berührung in Richtung der Zeitlinie (13) und/oder in eine Richtung quer zur Richtung der Zeitlinie (13) gezogen werden kann.

10. Verfahren nach einem der vorstehenden Ansprüche, umfassend den Schritt des Darstellens der Symbolsegmente (9) auf der Anzeige mit unterschiedlichen Farben basierend auf der Art der Vorgänge, die den Symbolsegmenten (9) zugeordnet sind.

11. Verfahren nach Anspruch 10, wobei die mit der Bewegung von Elementen verbundenen Symbolsegmente (9) eine erste Farbe aufweisen, die mit der Erwärmung der Platte (2) verbundenen Symbolsegmente (9) eine zweite Farbe aufweisen, die mit der Vakuumerzeugung verbundenen Symbolsegmente (9) eine dritte Farbe aufweisen, die mit der Abkühlung des Formteils verbundenen Symbolsegmente (9) eine vierte Farbe aufweisen.

12. Verfahren nach einem der vorstehenden Ansprüche, umfassend den Schritt des Anzeigens eines mit einem Symbolsegment (9) verknüpften Warnsignals (11) auf der Anzeige, wenn für den jeweiligen mit dem Symbolsegment (9) verknüpften Vorgang noch keine Einstellung vorgenommen wurde.

13. Verfahren nach einem der vorstehenden Ansprüche, umfassend den Schritt des Anzeigens eines mit einem Symbolsegment (9) verknüpften Anomaliesignals (12) auf der Anzeige, wenn ein Anomaliezustand in Bezug auf den jeweiligen mit dem Symbolsegment (9) verknüpften Vorgang erkannt wird.

14. Steuervorrichtung zum Steuern einer Thermoformeinrichtung zum Implementieren eines Verfahrens nach einem der vorstehenden Ansprüche, wobei die Vorrichtung umfasst:
- einen Touchscreen (8), der zum Anschluss an eine Thermoformeinrichtung (1) konfiguriert ist;
- Mittel zum Anzeigen von mindestens zwei Symbolsegmenten (9) auf zwei Bereichen einer Anzeige des Touchscreens (8), wobei jedes Symbolsegment (9) einem jeweiligen Thermoformzyklusvorgang zugeordnet ist, wobei:
* die Längen der Symbolsegmente (9) proportional zur Dauer der jeweiligen Vorgänge des Thermoformzyklus sind, wobei die beiden Enden jedes Symbolsegments (9) den Startzeitpunkt und den Endzeitpunkt des jeweiligen Vorgangs darstellen;
* die Symbolsegmente (9) parallel zueinander und so angeordnet sind, dass sie eine Zeitlinie (13) definieren, die die jeweiligen Vorgänge grafisch in chronologischer Reihenfolge darstellt;
* **dadurch gekennzeichnet, dass:**
jeder Bereich ein Eingabebereich des Touchscreens (8) ist, der so konfiguriert ist, dass die Start- und/oder Endzeit des jeweiligen Vorgangs geändert werden kann, indem **die Länge und die Positionierung jedes Symbolsegments entlang der Zeitachse durch Berühren variiert werden.**

15. Thermoformeinrichtung, umfassend:
- Greifmittel (3) zum Greifen einer Kante einer Platte (2) die thermogeformt werden soll, wobei das
Greifmittel (3) insbesondere mindestens einen Blechpressrahmen umfasst;
- Heizmittel (4) zum Erhitzen der Platte (2);
- eine Form (5) zum Thermoformen der Platte (2);
- eine Steuervorrichtung, die gemäß Anspruch 14 hergestellt ist.

## Revendications

1. Procédé de commande d'un appareil de thermoformage (1), dans lequel ledit procédé comprend les étapes consistant à :
- fournir un appareil de thermoformage (1) configuré pour effectuer au moins un cycle de thermoformage ;
- connecter un écran tactile (8) à l'appareil de thermoformage ;
- afficher au moins deux segments d'icônes (9) sur deux régions d'un affichage de l'écran tactile (8), chaque segment d'icône (9) étant associé à une opération respective du cycle de thermoformage, dans lequel :
* les longueurs des segments d'icônes (9) sont proportionnelles à la durée des opérations respectives du cycle de thermoformage, moyennant quoi les deux extrémités de chaque segment d'icône (9) représentent l'heure de début et l'heure de fin de l'opération respective ;
* les segments d'icônes (9) sont parallèles les uns aux autres et disposés de manière à définir une ligne de temps (13) qui représente graphiquement les opérations respectives dans l'ordre chronologique ;
**caractérisé en ce que** :
* chaque région est une région active ou de saisie de l'écran tactile (8) configurée pour permettre la modification de l'heure de début et/ou de fin de l'opération respective en **changeant la longueur et le positionnement de chaque segment d'icône le long de la ligne de temps par effleurement.**

2. Procédé selon la revendication 1, dans lequel lesdits au moins deux segments d'icônes comprennent un premier segment d'icône (9) associé à une première opération du cycle de thermoformage, ladite première opération comprenant au moins une course de moyens de préhension (3) dudit appareil de thermoformage (1) et/ou au moins une course d'un moule (5) dudit appareil de thermoformage (1) et/ou au moins une course d'un contre-moule (P) dudit appareil de thermoformage (1).

3. Procédé selon la revendication 1 ou 2, dans lequel lesdits au moins deux segments d'icônes comprennent un deuxième segment d'icône (9) associé à une deuxième opération du cycle de thermoformage, ladite deuxième opération comprenant au moins un chauffage d'une feuille (2) en cours de traitement au moyen de moyens de chauffage supérieurs (4) dudit appareil de thermoformage (1) et/ou au moins un chauffage d'une feuille (2) en cours de traitement par des moyens de chauffage inférieurs (4) dudit appareil de thermoformage (1), où « supérieur » et « inférieur » s'entendent en référence à une feuille (2) en cours de traitement.

4. Procédé selon l'une quelconque des revendications précédentes, dans lequel lesdits au moins deux segments d'icônes comprennent un troisième segment d'icône (9) associé à une troisième opération du cycle de thermoformage, ladite troisième opération comprenant une génération de dépression sur un moule (5) ou un contre-moule (P) dudit appareil de thermoformage (1) et/ou une génération de pression sur un moule (5) ou un contre-moule (P) dudit appareil de thermoformage (1).

5. Procédé selon l'une quelconque des revendications précédentes, dans lequel lesdits au moins deux segments d'icônes comprennent un quatrième segment d'icône (9) associé à une quatrième opération du cycle de thermoformage, ladite quatrième opération comprenant au moins un refroidissement d'une pièce au moyen de moyens de refroidissement dudit appareil de thermoformage (1) et/ou au moins une nébulisation sur une feuille (2) en cours de traitement au moyen d'un nébuliseur dudit appareil de thermoformage (1).

6. Procédé selon l'une quelconque des revendications précédentes, comprenant l'étape consistant à afficher sur ledit affichage une ligne (10) qui est orthogonale à la ligne de temps (13), ladite ligne (10) pouvant se déplacer dans la direction de la ligne de temps (13) de sorte que, pour chaque instant de la ligne de temps (13), ladite ligne (10) se superpose uniquement aux segments d'icônes (9) qui sont associés aux opérations du cycle de thermoformage qui, à ce même instant, sont actives.

7. Procédé selon la revendication 6, comprenant l'étape consistant à déplacer automatiquement ladite ligne (10) sur ledit affichage, pendant l'exécution du cycle de thermoformage, dans la direction de la ligne de temps (13) avec une vitesse définie représentative de l'avancement du temps à partir d'un moment initial jusqu'à un moment final du cycle de thermoformage.

8. Procédé selon l'une quelconque des revendications précédentes, comprenant l'étape consistant à afficher sur ledit affichage une ligne de cycle (14) disposée au niveau d'une extrémité dudit affichage pour indiquer deux étapes principales ou plus du cycle de thermoformage, en particulier des étapes principales de chauffage, de formage et d'extraction, où chaque étape principale regroupe deux opérations ou plus du cycle de thermoformage.

9. Procédé selon l'une quelconque des revendications précédentes, dans lequel ledit au moins un segment d'icône (9) est un élément sensible de l'écran tactile (8) et peut être glissé par effleurement par un opérateur dans la direction de la ligne de temps (13) et/ou dans une direction transversale à la direction de la ligne de temps (13).

10. Procédé selon l'une quelconque des revendications précédentes, comprenant l'étape consistant à représenter les segments d'icônes (9) sur l'affichage avec des couleurs différentes en fonction du type d'opérations associé aux segments d'icônes (9).

11. Procédé selon la revendication 10, dans lequel les segments d'icônes (9) associés au déplacement d'éléments ont une première couleur, les segments d'icônes (9) associés au chauffage de la feuille (2) ont une deuxième couleur, les segments d'icônes (9) associés à la génération de vide ont une troisième couleur, les segments d'icônes (9) associés au refroidissement de la pièce moulée ont une quatrième couleur.

12. Procédé selon l'une quelconque des revendications précédentes, comprenant l'étape consistant à afficher sur ledit affichage un signal d'avertissement (11) associé à un segment d'icône (9) si aucun réglage n'a encore été réalisé de l'opération respective associée audit segment d'icône (9).

13. Procédé selon l'une quelconque des revendications précédentes, comprenant l'étape consistant à afficher sur ledit affichage un signal d'anomalie (12) associé à un segment d'icône (9) si un état d'anomalie est détecté concernant l'opération respective associée audit segment d'icône (9).

14. Dispositif de commande pour commander un appareil de thermoformage pour la mise en oeuvre d'un procédé selon l'une quelconque des revendications précédentes, dans lequel ledit dispositif comprend :
- un écran tactile (8) configuré pour être connecté à un appareil de thermoformage (1) ;
- des moyens pour afficher au moins deux segments d'icônes (9) sur deux régions d'un affichage de l'écran tactile (8), chaque segment d'icône (9) étant associé à une opération de cycle de thermoformage respective, dans lequel :
* les longueurs des segments d'icônes (9) sont proportionnelles à la durée des opérations respectives du cycle de thermoformage, moyennant quoi les deux extrémités de chaque segment d'icône (9) représentent l'heure de début et l'heure de fin de l'opération respective ;
* les segments d'icônes (9) sont parallèles les uns aux autres et disposés de manière à définir une ligne de temps (13) qui représente graphiquement les opérations respectives dans l'ordre chronologique ;
* **caractérisé en ce que** :
chaque région est une région de saisie de l'écran tactile (8) configurée pour permettre la modification de l'heure de début et/ou de fin de l'opération respective en **changeant la longueur et le positionnement de chaque segment d'icône le long de la ligne de temps par effleurement.**

15. Appareil de thermoformage, comprenant :
- des moyens de préhension (3) pour saisir un bord d'une feuille (2) pour thermoformage, lesdits
moyens de préhension (3) comprenant, en particulier, au moins un cadre de pressage de feuilles ;
- des moyens de chauffage (4) pour chauffer la feuille (2) ;
- un moule (5) pour le thermoformage de la feuille (2) ;
- un dispositif de commande réalisé selon la revendication 14.
